(19) Europäisches Patentamt
European Patent Office
Office européen des brevets

(11) **EP 4 723 752 A1**

(12) **EUROPEAN PATENT APPLICATION**
published in accordance with Art. 153(4) EPC

(43) Date of publication:
**08.04.2026 Bulletin 2026/15**

(21) Application number: **24838502.3**

(22) Date of filing: **12.06.2024**

(51) International Patent Classification (IPC):
*H04W 52/02* (2009.01)

(52) Cooperative Patent Classification (CPC):
Y02D 30/70

(86) International application number:
**PCT/CN2024/098654**

(87) International publication number:
**WO 2025/011244 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.07.2023 CN 202310845224**

(71) Applicant: **Huawei Technologies Co., Ltd.
Shenzhen, Guangdong 518129 (CN)**

(72) Inventors:
• **XUE, Yifan
Shenzhen, Guangdong 518129 (CN)**
• **XUE, Lixia
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **WAKE-UP SIGNAL MONITORING METHOD AND COMMUNICATION APPARATUS**

(57) This application provides a wake-up signal monitoring method and a communication apparatus. The method includes: A terminal device receives first configuration information of a low-power wake-up signal LP-WUS, where the first configuration information is used to configure a first monitoring occasion MO set and a second MO set. The terminal device further monitors the LP-WUS based on the first MO set and the second MO set. According to the method, the terminal device may monitor the LP-WUS in a plurality of MO sets. This helps improve flexibility of monitoring the LP-WUS.

FIG. 5

## Description

This application claims priority to Chinese Patent Application No. 202310845224.1, filed with the China National Intellectual Property Administration on July 10, 2023 and entitled "WAKE-UP SIGNAL MONITORING METHOD AND COMMUNICATION APPARATUS", which is incorporated herein by reference in its entirety.

## TECHNICAL FIELD

This application relates to the communication field, and in particular, to a wake-up signal monitoring method and a communication apparatus.

## BACKGROUND

A low-power wake-up signal (low-power wake-up signal, LP-WUS) is also referred to as a wake-up signal (wake-up signal, WUS), and is used to trigger to turn on a main circuit to receive a paging message or initiate random access. Usually, a terminal device monitors the WUS through continuous monitoring (continuous monitoring) or discontinuous monitoring. The discontinuous monitoring is also referred to as duty cycle monitoring (duty cycle monitoring). In the duty cycle monitoring, the terminal device determines, based on a configuration of a network device, a WUS monitoring occasion (Monitoring occasion, MO) corresponding to the terminal device. How to configure the WUS MO corresponding to the terminal device becomes an urgent problem to be resolved.

## SUMMARY

Embodiments of this application provide a wake-up signal monitoring method and a communication apparatus. This helps improve flexibility of monitoring an LP-WUS.

According to a first aspect, this application provides a wake-up signal monitoring method. The method may be performed by a terminal device, or may be performed by an apparatus in the terminal device, or may be performed by an apparatus that can be used in cooperation with the terminal device. For example, the method may be performed by a chip (system). For example, the terminal device performs the method. The method includes: The terminal device receives first configuration information of a low-power wake-up signal LP-WUS, where the first configuration information is used to configure a first monitoring occasion MO set and a second MO set. The terminal device further monitors the LP-WUS based on the first MO set and the second MO set.

Based on the method described in the first aspect, the terminal device may monitor the LP-WUS based on a plurality of MO sets. This helps improve flexibility of monitoring the LP-WUS by the terminal device in comparison with a manner in which the LP-WUS is monitored based on only one MO set.

In a possible implementation, the LP-WUS monitored by the terminal device based on the second MO set includes a second LP-WUS, the second LP-WUS indicates wake-up information, and the wake-up information is used to wake up a terminal device.

In a possible implementation, the LP-WUS monitored by the terminal device based on the first MO set includes a first LP-WUS, the first LP-WUS indicates common information, and the common information includes one or more of the following: system information change indication information SI change, an earthquake and tsunami warning system information ETWS identifier, a commercial mobile alert system information CMAS identifier, cell information, tracking area information, a radio access network area, ETWS information, CMAS information, and second configuration information of the LP-WUS. According to this possible implementation, different terminal devices may receive common information based on a same first MO set. This helps reduce signaling overheads.

In a possible implementation, the LP-WUS monitored by the terminal device based on the first MO set further includes a third LP-WUS, the third LP-WUS indicates wake-up information, and the wake-up information is used to wake up a terminal device. According to this possible implementation, the terminal device may further receive the wake-up information in addition to receiving the common information in the first MO set. This helps avoid resource waste.

In a possible implementation, the first configuration information is used to configure one or more of a first monitoring periodicity, a first monitoring offset, and first monitoring duration that correspond to the first MO set. The first configuration information is further used to configure one or more of a second monitoring periodicity, a second monitoring offset, and second monitoring duration that correspond to the second MO set.

In a possible implementation, the first configuration information is used to configure the second monitoring periodicity and/or the second monitoring duration. Further, the terminal device may determine the second monitoring offset based on an identifier of the terminal device. According to this possible implementation, the first configuration information may not include the second monitoring offset. This helps reduce transmission resources.

In a possible implementation, the first configuration information includes a first periodicity configuration parameter, and the first periodicity configuration parameter is used to configure the first monitoring periodicity and the second monitoring periodicity. Alternatively, the first configuration information includes a second periodicity configuration parameter and a third periodicity configuration parameter, the second periodicity configuration parameter is used to configure the first monitoring periodicity, and the third periodicity configuration parameter is used to configure the second monitoring periodicity. According to this possible implementation, the first configuration information may be used to configure the first monitoring periodicity and the second monitoring periodicity by using a same configuration parameter, or may be used to configure the first monitoring periodicity and the second monitoring periodicity by using different configuration parameters. This helps improve configuration flexibility.

In a possible implementation, the first monitoring periodicity is the same as the second monitoring periodicity, and the second MO set does not overlap with the first MO set.

In a possible implementation, the first configuration information includes a first duration configuration parameter, and the first duration configuration parameter is used to configure the first monitoring duration and the second monitoring duration. Alternatively, the first configuration information includes a second duration configuration parameter and a third duration configuration parameter, the second duration configuration parameter is used to configure the first monitoring duration, and the third duration configuration parameter is used to configure the second monitoring duration. According to this possible implementation, the first configuration information may be used to configure the first monitoring duration and the second monitoring duration by using a same configuration parameter, or may be used to configure the first monitoring duration and the second monitoring duration by using different configuration parameters. This helps improve configuration flexibility.

According to a second aspect, this application provides a wake-up signal monitoring method. The method may be performed by a network device, or may be performed by an apparatus in the network device, or may be performed by an apparatus that can be used in cooperation with the network device. For example, the method may be performed by a chip (system). For example, the network device performs the method. The method includes: The network device sends first configuration information of a low-power wake-up signal LP-WUS, where the first configuration information is used to configure a first monitoring occasion MO set and a second MO set. The network device further sends the LP-WUS based on the first MO set and the second MO set.

Based on the method described in the second aspect, the network device may send the LP-WUS based on a plurality of MO sets. This helps improve flexibility of sending the LP-WUS by the network device in comparison with a manner in which the LP-WUS is sent based on only one MO set.

In a possible implementation, the LP-WUS sent by the network device based on the second MO set includes a second LP-WUS, the second LP-WUS indicates wake-up information, and the wake-up information is used to wake up a terminal device.

In a possible implementation, the LP-WUS sent by the network device based on the first MO set includes a first LP-WUS, the first LP-WUS indicates common information, and the common information includes one or more of the following: a system information change indication information SI change, an earthquake and tsunami warning system information ETWS identifier, a commercial mobile alert system information CMAS identifier, cell information, tracking area information, a radio access network area, ETWS information, CMAS information, and second configuration information of the LP-WUS. According to this possible implementation, the network device may configure a same first MO set for different terminal devices to send the common information. This helps reduce signaling overheads.

In a possible implementation, the LP-WUS sent by the network device based on the first MO set further includes a third LP-WUS, the third LP-WUS indicates wake-up information, and the wake-up information is used to wake up a terminal device. According to this possible implementation, the network device may further send the wake-up information in addition to sending the common information in the first MO set. This helps avoid resource waste.

In a possible implementation, the first configuration information is used to configure one or more of a first monitoring periodicity, a first monitoring offset, and first monitoring duration that correspond to the first MO set. The first configuration information is further used to configure one or more of a second monitoring periodicity, a second monitoring offset, and second monitoring duration that correspond to the second MO set.

In a possible implementation, the first configuration information is used to configure the second monitoring periodicity and/or the second monitoring duration, and the network device determines the second monitoring offset based on an identifier of the terminal device. According to this possible implementation, the first configuration information may not include the second monitoring offset. This helps reduce transmission resources.

In a possible implementation, the first configuration information includes a first periodicity configuration parameter, and the first periodicity configuration parameter is used to configure the first monitoring periodicity and the second monitoring periodicity. Alternatively, the first configuration information includes a second periodicity configuration parameter and a third periodicity configuration parameter, the second periodicity configuration parameter is used to configure the first monitoring periodicity, and the third periodicity configuration parameter is used to configure the second monitoring periodicity. According to this possible implementation, the first configuration information may be used to configure the first monitoring periodicity and the second monitoring periodicity by using a same configuration parameter, or may be used to configure the first monitoring periodicity and the second monitoring periodicity by using different configuration parameters. This helps improve configuration flexibility.

In a possible implementation, the first monitoring periodicity is the same as the second monitoring periodicity, and the second MO set does not overlap with the first MO set.

In a possible implementation, the first configuration information includes a first duration configuration parameter, and the first duration configuration parameter is used to configure the first monitoring duration and the second monitoring duration. Alternatively, the first configuration information includes a second duration configuration parameter and a third duration configuration parameter, the second duration configuration parameter is used to configure the first monitoring duration, and the third duration configuration parameter is used to configure the second monitoring duration. According to this possible implementation, the first configuration information may be used to configure the first monitoring duration and the second monitoring duration by using a same configuration parameter, or may be used to configure the first monitoring duration and the second monitoring duration by using different configuration parameters. This helps improve configuration flexibility.

According to a third aspect, this application provides a communication apparatus. The communication apparatus may be a terminal device, or may be an apparatus in the terminal device, or may be an apparatus that can be used in cooperation with the terminal device. For example, the communication apparatus may be a chip (system). The communication apparatus may perform the method according to the first aspect. A function of the communication apparatus may be implemented by hardware, or may be implemented by hardware executing corresponding software. The hardware or the software includes one or more units or modules corresponding to the function. Such a unit or module may be software and/or hardware, for example, a processing module and a transceiver module. The processing module may be a processor, and the transceiver module may be a transceiver. When the communication apparatus is a terminal device, the transceiver may be a radio frequency module. When the communication apparatus is a chip (system) in the terminal device, the transceiver may be an input/output interface, a pin, a circuit, or the like. For an operation performed by the communication apparatus and beneficial effects, refer to the method and the beneficial effects according to the first aspect.

According to a fourth aspect, this application provides a communication apparatus. The communication apparatus may be a network device, or may be an apparatus in the network device, or may be an apparatus that can be used in cooperation with the network device. For example, the communication apparatus may be a chip (system). The communication apparatus may perform the method according to the second aspect. A function of the communication apparatus may be implemented by hardware, or may be implemented by hardware executing corresponding software. The hardware or the software includes one or more units or modules corresponding to the function. Such a unit or module may be software and/or hardware, for example, a processing module and a transceiver module. The processing module may be a processor, and the transceiver module may be a transceiver. When the communication apparatus is a network device, the transceiver may be a radio frequency module. When the communication apparatus is a chip (system) in the network device, the transceiver may be an input/output interface, a pin, a circuit, or the like. For an operation performed by the communication apparatus and beneficial effects, refer to the method and the beneficial effects according to the second aspect.

According to a fifth aspect, this application provides a communication apparatus, and the communication apparatus includes a processor. The processor is configured to perform the method according to the first aspect, or is configured to perform the method according to the second aspect. Specifically, the processor may be configured to implement the method according to the first aspect through a logic circuit or by executing code instructions, or the processor is configured to implement the method according to the second aspect through a logic circuit or by executing code instructions. The communication apparatus may further include an interface circuit. The interface circuit is configured to: receive a signal from a communication apparatus other than the communication apparatus and transmit the signal to the processor, or send a signal from the processor to a communication apparatus other than the communication apparatus.

According to a sixth aspect, this application provides a computer-readable storage medium. The storage medium stores a computer program or instructions, and when the computer program or the instructions are executed by a communication apparatus, the method according to the first aspect or the method according to the second aspect is implemented.

According to a seventh aspect, this application provides a computer program product including instructions. When a communication apparatus reads and executes the instructions, the communication apparatus is enabled to perform the method according to the first aspect, or the communication apparatus is enabled to perform the method according to the second aspect.

According to an eighth aspect, this application provides a communication system, including a communication apparatus configured to perform the method according to the first aspect, and a communication apparatus configured to perform the method according to the second aspect.

## BRIEF DESCRIPTION OF DRAWINGS

FIG. 1a is a diagram of a communication system according to an embodiment of this application;
FIG. 1b is a working diagram of a second module according to an embodiment of this application;
FIG. 2 is a diagram of a waveform of an OOK signal according to an embodiment of this application;
FIG. 3 is a diagram of a waveform of an FSK signal according to an embodiment of this application;
FIG. 4 is a diagram of comparison between monitoring manners according to an embodiment of this application;
FIG. 5 is a schematic flowchart of a wake-up signal monitoring method according to an embodiment of this application;
FIG. 6 is a diagram of monitoring occasions according to an embodiment of this application;
FIG. 7 is a diagram of a structure of a communication apparatus according to an embodiment of this application; and
FIG. 8 is a diagram of a structure of another communication apparatus according to an embodiment of this application.

## DESCRIPTION OF EMBODIMENTS

In the specification, the claims, and the accompanying drawings of this application, terms such as "first" and "second" are intended to distinguish between different objects rather than indicate a specific order. In addition, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

Mentioning an "embodiment" in this specification means that a particular feature, structure, or characteristic described with reference to the embodiment may be included in at least one embodiment of this application. The phrase shown in various locations in the specification may not necessarily refer to a same embodiment, and is not a separate or alternative embodiment exclusive from another embodiment. It should be understood that embodiments described in this specification may be combined with another embodiment.

For ease of specific understanding of embodiments of this application, the following first describes a system architecture in embodiments of this application.

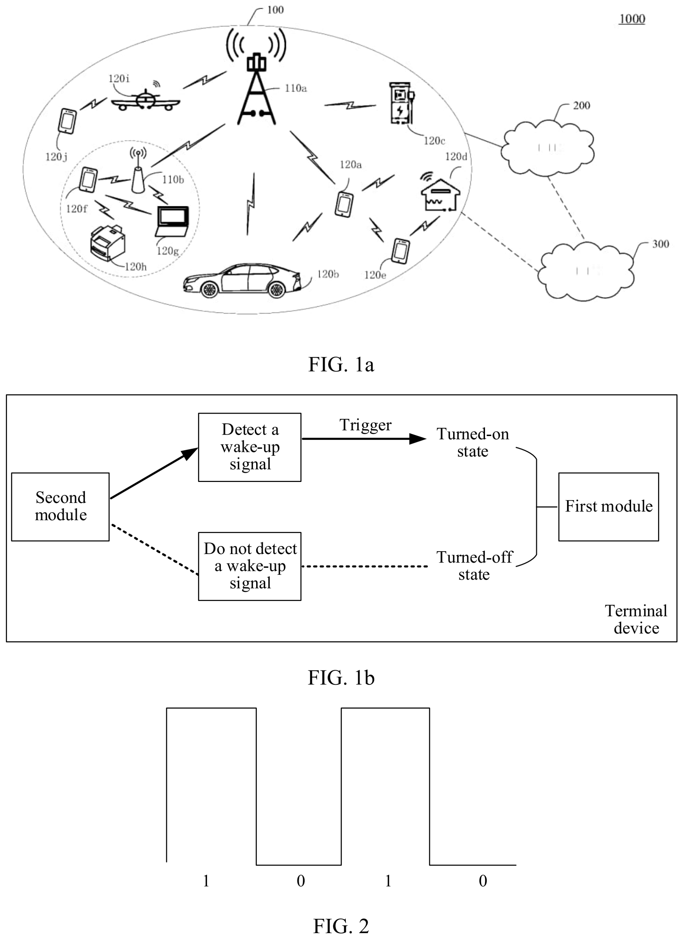

FIG. 1a is a diagram of an architecture of a communication system 1000 to which an embodiment of this application is applied. As shown in FIG. 1a, the communication system 1000 includes a radio access network (radio access network, RAN) 100, and a core network (core network, CN) 200. Optionally, the communication system 1000 may further include Internet 300. The RAN 100 includes at least one RAN node (for example, 110a and 110b shown in FIG. 1a, which are collectively referred to as 110), and may further include at least one terminal (for example, 120a to 120j shown in FIG. 1a, which are collectively referred to as 120). The RAN 100 may further include another RAN node, for example, a wireless relay device and/or a wireless backhaul device (not shown in FIG. 1a). The terminal 120 is connected to the RAN node 110 (which is also referred to as a network device 110 below) in a wireless manner, and the RAN node 110 is connected to the core network 200 in a wireless or wired manner. A core network device in the core network 200 and the RAN node 110 in the RAN 100 may be different physical devices that are independent of each other, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node is also referred to as a radio access network device, a RAN entity, or an access node, and is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, or a base station in the future mobile communication system. The RAN node may be a macro base station (for example, 110a shown in FIG. 1a), or may be a micro base station or an indoor base station (for example, 110b shown in FIG. 1a), or may be a relay node or a donor node.

In another application scenario, a plurality of RAN nodes may work together to help a terminal implement wireless access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in the 3GPP. The RU may be configured to implement a transceiver function of a radio frequency signal. The CU and the DU may be two separate RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes for a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

The terminal is a device that has a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at fixed locations, or may be movable. The base station and the terminal may be deployed on the land, including an indoor device, an outdoor device, a hand-held device, or a vehicle-mounted device; or may be deployed on a water surface; or may be deployed on an airplane, a balloon, or an artificial satellite. Application scenarios of the base station and the terminal are not limited in embodiments of this application.

A role of the base station and a role of the terminal may be relative to each other. For example, a helicopter or an uncrewed aerial vehicle 120i in FIG. 1a may be configured as a mobile base station. For those terminals 120j that access the radio access network 100 through 120i, the terminal 120i is a base station. However, for a base station 110a, 120i is a terminal, that is, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses. 110a and 110b in FIG. 1a may be referred to as communication apparatuses functioning as the base station, and 120a to 120j in FIG. 1a may be referred to as communication apparatuses functioning as the terminal.

Communication between the base station and the terminal, communication between the base stations, or communication between the terminals may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the function of the terminal.

For ease of understanding related content of embodiments of this application, the following further describes some terms in embodiments of this application. This part is merely for ease of understanding, and cannot be considered as a disclosure or a specific limitation on the technical solutions of this application.

1. Warning information

The warning information mentioned in this application includes but is not limited to earthquake and tsunami warning system (earthquake and tsunami warning system, ETWS) information and/or commercial mobile alert system (commercial mobile alert system, CMAS) information. In a new radio (new radio, NR) system, a network device may send the warning information to a terminal device by using a broadcast message. Usually, the warning information includes two parts: a primary notification (primary notification) message and a secondary notification (secondary notification) message, and a priority of the primary notification message is higher than a priority of the secondary notification message.

The primary notification message indicates urgent information in the warning information, and has a small data volume. For example, a primary notification message of the ETWS includes a type of the message (which indicates whether the message is an earthquake warning or a tsunami warning) and a manner in which the terminal device prompts a user. Usually, the network device needs to complete a process from receiving the primary notification message from an operator to transferring the primary notification message to the terminal device within 4s (that is, a transmission latency between the network device and the terminal device does not exceed 4s). A data volume of the primary notification message is approximately several bytes (bytes).

The secondary notification message indicates less urgent information in the warning information, and has a large data volume. For example, a secondary notification message of the ETWS includes a purpose of sending the message (whether the message is warning information used for testing or training), a safe place, how to obtain help, time for food distribution, and the like. For the secondary notification message, there is generally no specific requirement for a transmission delay and a data volume.

2. Paging

Paging is a process in which a network device periodically sends a paging message (paging message) to a terminal device that is in an idle (idle) state or an inactive (inactive) state, so that the terminal device returns from the idle state or the inactive state to a connected (connected) state. The process includes: The network device determines a paging occasion (paging occasion, PO) corresponding to the terminal device, and sends, to the terminal device on the PO, a physical downlink control channel (physical downlink control channel, PDCCH) carrying paging downlink control information (downlink control information, DCI). The paging DCI may schedule a physical downlink shared channel (physical downlink shared channel, PDSCH) carrying the paging message. If the paging DCI indicates that the PDSCH carrying the paging message is scheduled, the network device sends, at a resource location indicated by the paging DCI, the PDSCH carrying the paging message. Correspondingly, the terminal monitors the paging DCI on a PO corresponding to the terminal. If the terminal receives the paging DCI, the terminal receives, based on the received paging DCI, the PDSCH carrying the paging message, and determines, based on the PDSCH carrying the paging message, whether the terminal is paged. For example, if the paging message received by the terminal carries identifier information (for example, a user equipment identifier (user equipment identifier, UE ID)) of the terminal, it is determined that the terminal is paged. If the paging message received by the terminal does not carry the identifier information, it is determined that the terminal is not paged. If the terminal is paged, the terminal initiates a random access procedure, switches to the connected (connected) state, establishes a communication connection with the network device, and then performs data communication with the network device.

Based on different paging initiators, paging may be classified into core network paging (CN paging) and access network paging (RAN paging).

The core network paging is paging initiated by a core network device and received by the terminal device in the idle state. The core network device sends an identifier (for example, a system architecture evolution (system architecture evolution, SAE) temporary mobile subscriber identity (temporary mobile subscriber identity, TMSI), which is also referred to as an S-TMSI) of a paged terminal device to each base station in a tracking area (tracking area) in which the terminal device is located, so that each base station in the tracking area in which the terminal device is located sends a paging message to the terminal device. It should be noted that, for a base station, the base station broadcasts, in system information, a tracking area in which the base station is currently located, for example, indicates the tracking area by using TrackingAreaCode in the system information. For the terminal device, when moving to a new cell in the idle state, the terminal device receives system information of the new cell, and may determine, by using TrackingAreaCode in the system information, whether to move to a new tracking area. If the terminal device determines that the terminal device has entered the new tracking area, the terminal device initiates a tracking area update process, to notify a network side of a tracking area in which the terminal device is currently located, so that the core network device initiates paging for the terminal device based on the tracking area in which the terminal device is currently located.

The access network paging is paging initiated by a base station and received by the terminal device in the inactive state. Specifically, when the terminal device switches from the connected state to the inactive state, a base station (referred to as a last serving base station (last serving gNB)) that corresponds to a cell (referred to as a last serving cell (last serving cell)) accessed by the terminal device sends an identifier (for example, a radio network temporary identifier for the inactive state (inactive radio network temporary identifier, I-RNTI)) of the paged terminal device to each base station in a radio access network area (RAN area) in which the terminal device is located, so that each base station in the RAN area in which the terminal device is located sends a paging message to the terminal device. The identifier of the terminal device is allocated by the last serving cell. It should be noted that, for the base station, the base station broadcasts, in system information, a RAN area in which the base station is currently located, for example, indicates the RAN area by using RAN-AreaCode in the system information. For the terminal device, when moving to a new cell in the inactive state, the terminal device receives system information of the new cell, and may determine, by using RAN-AreaCode in the system information, whether to move to a new RAN area. If the terminal device determines that the terminal device has entered the new RAN area, the terminal device initiates a RAN area update process, to notify the network side of a RAN area in which the terminal device is currently located, so that the base station initiates paging for the terminal device based on the RAN area in which the terminal device is currently located.

3. System information update

In NR, system information of a cell is not frequently updated. After a terminal device reads the system information of the cell, the terminal device does not frequently read the system information. When the system information of the cell is updated, the terminal device needs to read the updated system information. If the terminal device does not read the updated system information, an error may be caused. For example, if a paging-related configuration is updated for the cell, and the terminal device does not read the updated system information, the terminal device cannot correctly receive a paging message. For another example, if a configuration related to random access is updated for the cell, and the terminal device does not read the updated system information, the terminal device cannot successfully initiate random access.

Usually, to ensure that the terminal device can read the system information in a timely manner after the system information is updated, paging DCI includes 1-bit system information change indication information (system information change, SI change), to indicate whether the terminal device needs to read the system information again.

In a possible implementation, the SI change includes ETWS&CMAS indication information (or referred to as an ETWS&CMAS flag). When the system information includes an ETWS message and/or a CMAS message, 1-bit ETWS&CMAS indication information included in the paging DCI may also be used to indicate the terminal device to read the system information again.

4. Wake-up receiver (wake-up receiver, WUR) link

Generally, irrespective of whether the terminal device performs a paging receiving procedure in an idle/inactive state or the terminal device receives data in a connected state, the terminal device uses a same receiving module (or a receiver or a receiving circuit). In this application, a module that completes these functions (or performs a related step) may be referred to as a first module. It may be understood that the first module is merely named for distinguishing, and a specific name of the first module does not limit the protection scope of this application. For example, the first module may alternatively be a first circuit or a main circuit. For ease of description, the first module is uniformly used for description below.

A process in which the terminal device receives a signal by using the first module may be referred to as a process in which the signal is transmitted through a link (which may be denoted as a first link for distinguishing). The first link represents a connection relationship between the terminal device and a network device, and is a logical concept rather than a physical entity. The first link may also be referred to as a main link. For ease of description, the first link is uniformly used for description below.

It may be understood that, power consumption of performing the paging receiving procedure by the terminal device by using the first module is high. For example, the terminal device first uses a receiving module of the first module to receive a downlink signal, then performs blind detection on a physical downlink control channel (physical downlink control channel, PDCCH), and finally performs decoding on a received physical downlink shared channel (physical downlink shared channel, PDSCH). High power consumption is caused for these steps. In addition, because a circuit structure of the first module is complex, reference power consumption of the first module during operation is also high.

To reduce the power consumption caused when the terminal device performs the paging receiving procedure by using the first module, the terminal device may use a separate low power consumption small-scale circuit to receive a wake-up signal (wake-up signal/radio, WUS/WUR). The wake-up signal indicates paging-related information, and the paging-related information may include a paged terminal device or terminal device group. The low power consumption small-scale circuit may be implemented by using a separate small-scale circuit or chip with a simple structure, so that power consumption of the low power consumption small-scale circuit is low.

In a possible implementation, the low power consumption small-scale circuit may alternatively be a wake-up receiver (wake-up receiver, WUR), a wake-up circuit, a low power consumption circuit, or the like. A specific name of the low power consumption small-scale circuit is not limited in this application. In this application, the low power consumption small-scale circuit may be referred to as a second module. It may be understood that the second module is merely named for distinguishing, and a specific name of the second module does not limit the protection scope of this application. For example, the second module may alternatively be a second circuit or a wake-up circuit. For ease of description, the low power consumption small-scale circuit is uniformly described as the second module below.

Similarly, a process in which the terminal device receives a signal by using the second module may be referred to as a process in which the signal is transmitted through a link (which is denoted as a second link for distinguishing). The second link represents a connection relationship between the terminal device and the network device, and is a logical concept rather than a physical entity. It should be understood that the wake-up signal is merely a name as an example, and a name thereof is not limited in this application. In addition, for description that the terminal device receives the wake-up signal by using the second module, refer to FIG. 2.

FIG. 1b is a working diagram of a second module in a terminal device according to an embodiment of this application.

As shown in FIG. 1b, the terminal device includes a first module and the second module. The second module may receive a wake-up signal, for example, an LP-WUS.

For example, the wake-up signal may carry paging information. When the terminal device is in an idle/inactive state, if the second module detects the wake-up signal, the first module may be triggered to be in a turned-on state. If the second module does not detect the wake-up signal, the first module may be in a disabled state or in an ultra-deep sleep state (ultra-deep sleep state).

If the paging information carried in the wake-up signal may indicate a paged terminal device #1, after a second module in the terminal device #1 detects the paging information, the first module may be triggered, so that the terminal device #1 initiates a random access procedure after the first module is in the turned-on state. If the paging information carried in the wake-up signal indicates a terminal device group to which the paged terminal device #1 belongs, after the second module in the terminal device #1 detects the paging information, the first module may be triggered, so that after the first module is in the turned-on state, the terminal device #1 receives paging (paging) on a PO, and determines, based on a paging result, whether the terminal device #1 is paged. The terminal device may periodically receive paging. In an example, the terminal device may obtain a location of a paging frame (paging frame, PF) and a location of a PO in the PF through calculation and based on an identifier (identifier, ID) (or referred to as a UE ID) of the terminal device, and receive paging on the PO.

For example, the wake-up signal may carry PDCCH monitoring indication information. When the terminal device is in a connected state, if the second module detects the wake-up signal, the first module may be triggered, so that the first module is in the turned-on state and monitors a PDCCH. If the second module does not detect the wake-up signal, the first module may be in a sleep state (for example, micro sleep (micro sleep), light sleep (light sleep), or deep sleep (deep sleep)).

It may be understood that the first module in the turned-on state may detect or receive a signal other than the wake-up signal, and the first module in the disabled state does not detect or receive a signal.

5. Modulation schemes for the LP-WUS

It should be noted that the modulation schemes mentioned in this application include but are not limited to on-off keying (on-off keying, OOK) modulation and frequency-shift keying (frequency-shift keying, FSK) modulation.

5.1 OOK modulation

When the OOK modulation is used for the LP-WUS, a WUR of a terminal device may receive the LP-WUS by using an envelope detection method. When the OOK modulation is used for the LP-WUS, each (encoded) bit corresponds to one symbol (symbol), which may also be referred to as a chip (chip). After a signal in a symbol is received, a value of a bit corresponding to the symbol may be determined based on whether a signal is sent in the symbol.

In an example, when a signal is sent within a symbol length (that is, signal power within the symbol length is not 0, or a signal within the symbol length is an ON signal), a bit corresponding to the symbol is "1". When no signal is sent within a symbol length (that is, signal power within the symbol length is 0, or a signal within the symbol length is an OFF signal), a bit corresponding to the symbol is "0". For example, when a waveform of a received signal is shown in FIG. 2, the waveform represents four bits as "1010". In another example, a bit corresponding to a symbol in which a signal is sent within the symbol length (that is, signal power is not 0 within the symbol length) may be determined as "0", and a bit corresponding to a symbol in which no signal is sent within the symbol length (that is, signal power is 0 within the symbol length) may be determined as "1". This is not specifically limited in this application.

In a possible implementation, after receiving the LP-WUS on which OOK modulation is performed, the WUR may demodulate the LP-WUS based on a threshold. Within a symbol length, if signal power (or a signal amplitude) received by the WUR is greater than the threshold, it is considered that a value of a bit received by the WUR is 1. If the signal power (or the signal amplitude) received by the WUR is less than the threshold, it is considered that the value of the bit received by the WUR is 0.

In another possible implementation, the LP-WUS may be a signal on which OOK modulation is performed based on Manchester coding. To be specific, when sending a signal, a transmitter sends 1-bit original information by using two OOK symbols. For example, in Manchester coding, an original information bit "0" is encoded as "10", and an original information bit "1" is encoded as "01", so that the original information bit "0" corresponds to an ON signal followed by an OFF signal, and the original information bit "1" corresponds to an OFF signal followed by an ON signal. Further, after receiving the LP-WUS on which OOK modulation is performed based on Manchester coding, the WUR may compare values of signal power (or signal amplitudes) in two adjacent symbols. If signal power (or a signal amplitude) in the former symbol is greater than signal power (or a signal amplitude) in the latter symbol, it is considered that a received bit is "0". If the signal power (or the signal amplitude) in the former symbol is not greater than the signal power (or the signal amplitude) in the latter symbol, it is considered that the received bit is "1".

5.2 FSK modulation

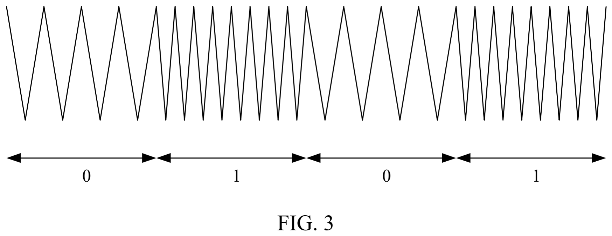

When the FSK modulation is used for the LP-WUS, different frequency resources may be used for different information. For example, for 2FSK, 1-bit information is carried by using two frequency resources (namely, a frequency resource f0 and a frequency resource f1). When a value of a bit of original information is 0, the information may be sent on the frequency resource f0, and no information is sent on the frequency resource f1. When the value of the bit of the original information is 1, the information may be sent on the frequency resource f1, and no information is sent on the frequency resource f0. It is assumed that f0<f1, and a waveform of an FSK signal with information of 0101 is shown in FIG. 3. In a first symbol and a third symbol, a frequency of a signal is low, and in a second symbol and a fourth symbol, a frequency of a signal is high.

In a possible implementation, the FSK may further support a higher modulation order, to carry more information. For example, for 4FSK, 2-bit information may be carried by using four candidate frequency domain resources (namely, frequency resources f0 to f3). When bits of original information are 00, the information may be sent on the frequency resource f0, and no information is sent on the frequency resources f1, f2, and f3. When the bits of the original information are 01, the information may be sent on the frequency resource f1, and no information is sent on the frequency resources f0, f2, and f3. When the bits of the original information are 10, the information may be sent on the frequency resource f2, and no information is sent on the frequency resources f0, f1, and f3. When the bits of the original information are 11, the information may be sent on the frequency resource f3, and no information is sent on the frequency resources f0, f1, and f2. In this way, a receive end may compare values of power on a plurality of frequency resources, to determine transmitted information.

The foregoing "frequency resource" may also be equivalently referred to as a "frequency location".

6. Monitoring manners for an LP-WUS

A terminal device monitors the LP-WUS through but not limited to the following two monitoring manners: continuous monitoring (continuous monitoring) and duty cycle monitoring (duty cycle monitoring). The continuous monitoring means that a WUR that is of the terminal device and that is for receiving the LP-WUS is always enabled, and the LP-WUS is monitored on all occasions (or understood as locations) on which the LP-WUS is likely to be transmitted. The duty cycle monitoring may also be referred to as discontinuous monitoring or periodic monitoring, and means that the WUR that is of the terminal device and that is for receiving the LP-WUS is intermittently enabled (that is, being enabled for a part of time or disabled for a part of time), and the LP-WUS is monitored only on a part of occasions on which the LP-WUS is likely to be transmitted.

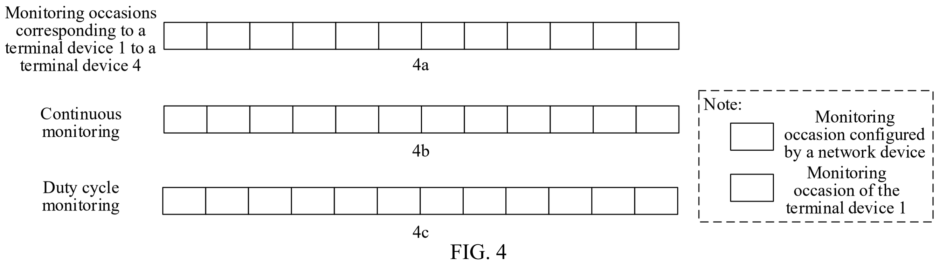

For example, monitoring occasions configured by a network device for a terminal device 1 to a terminal device 4 are shown in 4a in FIG. 4. For the terminal device 1, if the terminal device 1 monitors the LP-WUS through continuous monitoring, the terminal device monitors the LP-WUS on all possible monitoring occasions, as shown in 4b in FIG. 4. If the terminal device 1 monitors the LP-WUS through duty cycle monitoring, the terminal device monitors the LP-WUS on a part of possible monitoring occasions, as shown in 4c in FIG. 4.

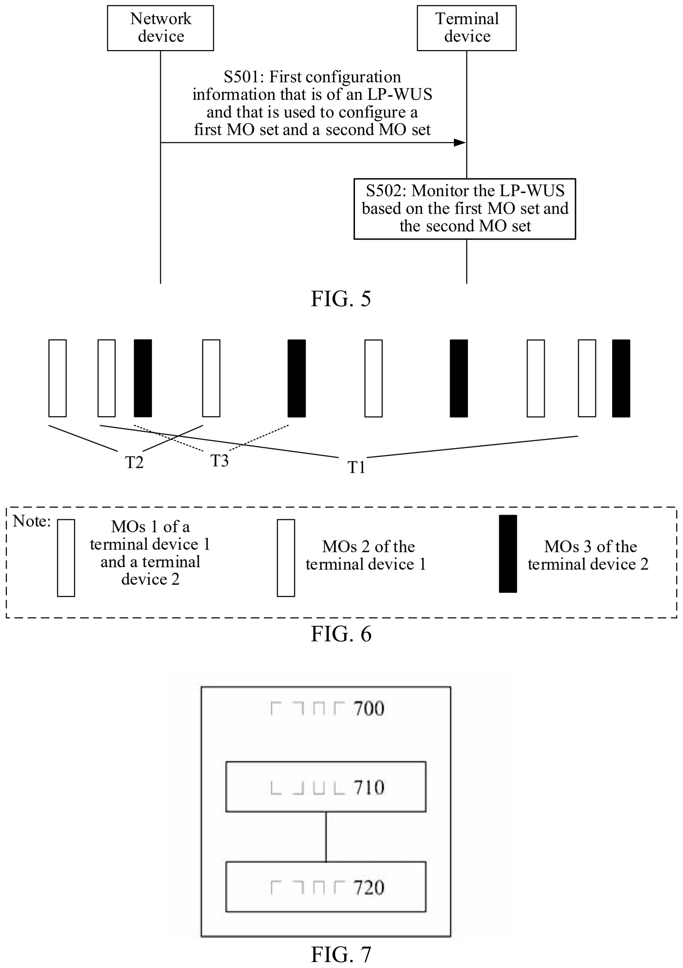

When the terminal device uses the duty cycle monitoring manner, this application provides a wake-up signal monitoring method, to improve flexibility of monitoring the LP-WUS by the terminal device. The following describes in detail, with reference to the accompanying drawings, a wake-up signal monitoring method and a communication apparatus provided in embodiments of this application. FIG. 5 is a schematic flowchart of a wake-up signal monitoring method according to an embodiment of this application. As shown in FIG. 5, the wake-up signal monitoring method includes the following step S501 and step S502. A terminal device and a network device are used as an example of an execution body of the method shown in FIG. 5 for description. It may be understood that the execution body of the method shown in FIG. 5 may alternatively be an apparatus in the terminal device and an apparatus in the network device, or an apparatus used in cooperation with the terminal device and an apparatus used in cooperation with the network device, for example, a chip (system) in the terminal device and a chip (system) in the network device. Processing performed by a single execution body shown in this embodiment of this application may also be classified as being performed by a plurality of execution bodies. These execution bodies may be logically and/or physically separated. For example, processing performed by the network device may be classified as being performed by one or more of a CU, a DU, and an RU.

S501: The terminal device receives first configuration information of an LP-WUS, where the first configuration information is used to configure a first MO set and a second MO set. Correspondingly, the network device sends the first configuration information of the LP-WUS.

The first configuration information is used to configure one or more of a first monitoring periodicity, a first monitoring offset, and first monitoring duration that correspond to the first MO set. The first configuration information is further used to configure one or more of a second monitoring periodicity, a second monitoring offset, and second monitoring duration that correspond to the second MO set. It should be noted that the MO set (including the first MO set and the second MO set) mentioned in this application includes a plurality of MOs, and is a set of MOs that periodically appear. It may also be understood that, the first MO set includes a plurality of first MOs, and an interval between start moments of two adjacent first MOs is the first monitoring periodicity of the first MO set. The second MO set includes a plurality of second MOs, and an interval between start moments of two adjacent second MOs is the second monitoring periodicity of the second MO set. In this application, the first MO set may also be equivalently understood as a first MO. In this case, the first MO is a type of MOs, the first MO appearing once may be referred to as an instance of the first MO, and an interval between start moments of two adjacent instances of the first MO is a first monitoring periodicity of the first MO. The second MO set may also be equivalently understood as a second MO. In this case, the second MO is also a type of MOs, the second MO appearing once may be referred to as an instance of the second MO, and an interval between start moments of two adjacent instances of the second MO is a second monitoring periodicity of the second MO.

The network device sends the first configuration information of the LP-WUS to a plurality of terminal devices, and each terminal device determines, based on the first configuration information, a common first MO set and a second MO set corresponding to the terminal device. It may be understood that different terminal devices (or understood as terminal devices in different terminal device groups) may determine a same MO set (namely, the first MO set) and different MO sets (that is, the second MO set) based on the first configuration information. The first MO set is a common MO set corresponding to all terminal devices, that is, all terminal devices may monitor the LP-WUS based on the first MO set. The second MO set is a unique MO set corresponding to different terminal devices (or terminal devices in different terminal device groups), and each terminal device (or each terminal device group) monitors the LP-WUS based on a second MO set corresponding to the terminal device (or the terminal device group).

For example, a terminal device 1 is a terminal device in a device group 1, and a terminal device 2 is a terminal device in a device group 2. As shown in FIG. 6, the terminal device 1 determines an MO set 1 (that is, the first MO set, which includes a plurality of MOs 1) and an MO set 2 (that is, a second MO set that corresponds to the terminal device 1 and includes a plurality of MOs 2) based on the first configuration information. The terminal device 2 determines the MO set 1 (that is, the first MO set, which includes a plurality of MOs 1) and an MO set 3 (that is, a second MO set that corresponds to the terminal device 2 and includes a plurality of MOs 3) based on the first configuration information.

In a possible implementation, the first configuration information is used to configure the second monitoring periodicity and/or the second monitoring duration. In other words, when the first configuration information is not used to configure the second monitoring offset of the second MO set, the terminal device and the network device may determine, based on an identifier of the terminal device, a second monitoring offset corresponding to the terminal device.

For example, the network device configures a common first MO set and N second MO sets for N terminal devices (or N terminal device groups) respectively based on the first configuration information, where the first configuration information does not include a second monitoring offset corresponding to each second MO set. In this case, the network device and the terminal device may determine, according to Formula 1, a second monitoring offset corresponding to each terminal device:

$$\text{Second monitoring offset} = \text{ID of the terminal device} \% (N+1) \ (1)$$

In a possible implementation, the first configuration information may be used to configure a first monitoring periodicity and a second monitoring periodicity by using a same periodicity configuration parameter. For example, the first configuration information includes a first periodicity configuration parameter, and the first periodicity configuration parameter is used to configure the first monitoring periodicity and the second monitoring periodicity. In this case, the first monitoring periodicity is the same as the second monitoring periodicity. Alternatively, the first configuration information may be used to configure a first monitoring periodicity and a second monitoring periodicity by using different periodicity configuration parameters. For example, the first configuration information includes a second periodicity configuration parameter and a third periodicity configuration parameter, the second periodicity configuration parameter is used to configure the first monitoring periodicity, and the third periodicity configuration parameter is used to configure the second monitoring periodicity. In this case, the first monitoring periodicity may be the same as or different from the second monitoring periodicity.

When the first monitoring periodicity is the same as the second monitoring periodicity, the second MO set does not overlap with the first MO set.

It may be understood that, when the network device configures N second MO sets and one first MO set for the N terminal devices (or the N terminal device groups), the MO sets do not overlap with each other. In other words, the first MO set does not overlap with any one of the N second MO sets, and neither of two of the N second MO sets overlaps with each other. It should be noted that the non-overlapping mentioned in this application includes complete non-overlapping or partial overlapping.

In a possible implementation, the first configuration information may be used to configure first monitoring duration and second monitoring duration by using a same duration configuration parameter. For example, the first configuration information includes the first duration configuration parameter, and the first duration configuration parameter is used to configure the first monitoring duration and the second monitoring duration. In this case, the first monitoring duration is the same as the second monitoring duration. Alternatively, the first configuration information may be used to configure first monitoring duration and second monitoring duration by using different duration configuration parameters. For example, the first configuration information includes a second duration configuration parameter and a third duration configuration parameter, the second duration configuration parameter is used to configure the first monitoring duration, and the third duration configuration parameter is used to configure the second monitoring duration. In this case, the first monitoring duration may be the same as or different from the second monitoring duration.

S502: The terminal device monitors the LP-WUS based on the first MO set and the second MO set. Correspondingly, the network device sends the LP-WUS based on the first MO set and the second MO set.

It may be understood that the network device configures N second MO sets and one first MO set for the N terminal devices. For any terminal device, the network device sends an LP-WUS to the terminal device based on a second MO set corresponding to the terminal device and the first MO set, and the terminal device also monitors the LP-WUS based on the second MO set corresponding to the terminal device and the first MO set.

For example, the network device configures an MO set 1 (that is, the first MO set) and an MO set 2 (that is, a second MO set corresponding to the terminal device 1) for the terminal device 1, and the network device configures the MO set 1 (that is, the first MO set) and an MO set 3 (that is, a second MO set corresponding to the terminal device 2) for the terminal device 2. In this case, the network device may send an LP-WUS to the terminal device 1 based on the MO set 1 and the MO set 2, and may send an LP-WUS to the terminal device 2 based on the MO set 1 and the MO set 3.

In a possible implementation, the LP-WUS monitored by the terminal device based on the second MO set includes a second LP-WUS, the second LP-WUS indicates wake-up information, and the wake-up information is used to wake up a terminal device. Correspondingly, the LP-WUS sent by the network device based on the second MO set includes the second LP-WUS. It may be understood that, when the network device needs to wake up a terminal device (for example, when a service of the terminal device arrives), the network device may send a second LP-WUS on a second MO corresponding to the terminal device to wake up the terminal device. The second LP-WUS may include identifier information related to the terminal device.

In a possible implementation, the LP-WUS monitored by the terminal device based on the first MO set includes a first LP-WUS, the first LP-WUS indicates common information, and the common information includes but is not limited to one or more of the following: an SI change, an ETWS identifier, a CMAS identifier, cell information, tracking area information, radio access network area information, ETWS information, CMAS information, and second configuration information of the LP-WUS. The second configuration information of the LP-WUS is configuration information for subsequently monitoring the LP-WUS by the terminal device. For example, the terminal device receives the second configuration information of the LP-WUS in a slot n, and may make the second configuration information of the LP-WUS take effect in a slot n+X. In other words, the terminal device may monitor the LP-WUS based on the second configuration information from the slot n+X, and the terminal device still monitors the LP-WUS based on the first configuration information before the slot n+X.

In a possible implementation, in addition to monitoring the first LP-WUS based on the first MO set, the terminal device may further monitor a third LP-WUS based on the first MO set, where the third LP-WUS indicates wake-up information, and the wake-up information is used to wake up a terminal device. It may be understood that, the third LP-WUS and the second LP-WUS are LP-WUSs of a same type, and are LP-WUSs that indicate the wake-up information. In other words, for a terminal device, the network device may send, to the terminal device based on a second MO set corresponding to the terminal device, an LP-WUS that indicates the wake-up information, or may send, to the terminal device based on the common first MO set, an LP-WUS that indicates the wake-up information. According to this possible implementation, when no LP-WUS indicating the common information is sent in the first MO set, the terminal device may be woken up based on the first MO set. This helps improve resource utilization.

It should be noted that formats of the first LP-WUS, the second LP-WUS, and the third LP-WUS mentioned in this application may be the same as or may be different from each other. This is not specifically limited in this application. That formats of two LP-WUSs are different from each other may be understood as that the two LP-WUSs carry completely different information or information that is not exactly the same.

In conclusion, according to the method shown in FIG. 5, a terminal device may monitor an LP-WUS based on a plurality of MO sets. This helps improve flexibility of monitoring the LP-WUS by the terminal device in comparison with a manner in which the LP-WUS is monitored based on only one MO set.

It may be understood that, to implement the functions in the foregoing embodiments, the terminal device includes corresponding hardware structures and/or software modules for performing the functions. A person skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

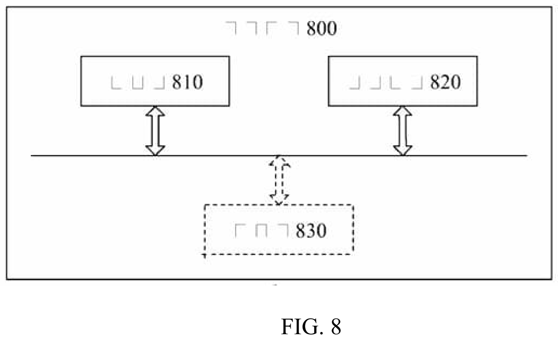

FIG. 7 and FIG. 8 are diagrams of possible structures of communication apparatuses according to embodiments of this application. These communication apparatuses may be configured to implement functions of the terminal device in the foregoing method embodiments, and therefore can also achieve the beneficial effects of the foregoing method embodiments. In this embodiment of this application, the communication apparatus may be the terminal 120 shown in FIG. 1a, or may be a module (for example, a chip) used in the terminal device. Alternatively, the communication apparatus may be the network device 110 shown in FIG. 1a, or may be a module (for example, a chip) used in the network device.

As shown in FIG. 7, a communication apparatus 700 includes a processing unit 710 and a transceiver unit 720. The communication apparatus 700 is configured to implement the functions of the terminal device in the method embodiments shown in FIG. 5.

When the communication apparatus 700 is configured to implement a function of the terminal device in the method embodiments shown in FIG. 5, the transceiver unit 720 is configured to receive first configuration information of a low-power wake-up signal LP-WUS, where the first configuration information is used to configure a first monitoring occasion MO set and a second MO set. The transceiver unit 720 is further configured to monitor the LP-WUS based on the first MO set and the second MO set.

In a possible implementation, the LP-WUS monitored based on the second MO set includes a second LP-WUS, the second LP-WUS indicates wake-up information, and the wake-up information is used to wake up a terminal device.

In a possible implementation, the LP-WUS monitored based on the first MO set includes a first LP-WUS, the first LP-WUS indicates common information, and the common information includes one or more of the following: a system information change indication information SI change, an earthquake and tsunami warning system information ETWS identifier, a commercial mobile alert system information CMAS identifier, cell information, tracking area information, a radio access network area, ETWS information, CMAS information, and second configuration information of the LP-WUS.

In a possible implementation, the LP-WUS monitored based on the first MO set further includes a third LP-WUS, the third LP-WUS indicates wake-up information, and the wake-up information is used to wake up a terminal device.

In a possible implementation, the first configuration information is used to configure one or more of a first monitoring periodicity, a first monitoring offset, and first monitoring duration that correspond to the first MO set. The first configuration information is further used to configure one or more of a second monitoring periodicity, a second monitoring offset, and second monitoring duration that correspond to the second MO set.

In a possible implementation, the first configuration information is used to configure the second monitoring periodicity and/or the second monitoring duration, and the processing unit 710 is configured to determine the second monitoring offset based on an identifier of the terminal device.

In a possible implementation, the first configuration information includes a first periodicity configuration parameter, and the first periodicity configuration parameter is used to configure the first monitoring periodicity and the second monitoring periodicity. Alternatively, the first configuration information includes a second periodicity configuration parameter and a third periodicity configuration parameter, the second periodicity configuration parameter is used to configure the first monitoring periodicity, and the third periodicity configuration parameter is used to configure the second monitoring periodicity.

In a possible implementation, the first monitoring periodicity is the same as the second monitoring periodicity, and the second MO set does not overlap with the first MO set.

In a possible implementation, the first configuration information includes a first duration configuration parameter, and the first duration configuration parameter is used to configure the first monitoring duration and the second monitoring duration. Alternatively, the first configuration information includes a second duration configuration parameter and a third duration configuration parameter, the second duration configuration parameter is used to configure the first monitoring duration, and the third duration configuration parameter is used to configure the second monitoring duration.

For more detailed descriptions of the transceiver unit 720 and the processing unit 710, refer to related descriptions of the terminal device in the method embodiments shown in FIG. 5.

As shown in FIG. 7, the communication apparatus 700 includes the processing unit 710 and the transceiver unit 720. The communication apparatus 700 is configured to implement the functions of the network device in the method embodiments shown in FIG. 5.

When the communication apparatus 700 is configured to implement a function of the network device in the method embodiments shown in FIG. 5, the transceiver unit 720 is configured to send first configuration information of a low-power wake-up signal LP-WUS, where the first configuration information is used to configure a first monitoring occasion MO set and a second MO set. The transceiver unit 720 is further configured to send the LP-WUS based on the first MO set and the second MO set.

In a possible implementation, the LP-WUS sent based on the second MO set includes a second LP-WUS, the second LP-WUS indicates wake-up information, and the wake-up information is used to wake up a terminal device.

In a possible implementation, the LP-WUS sent based on the first MO set includes a first LP-WUS, the first LP-WUS indicates common information, and the common information includes one or more of the following: a system information change indication information SI change, an earthquake and tsunami warning system information ETWS identifier, a commercial mobile alert system information identifier CMAS identifier, cell information, tracking area information, a radio access network area, ETWS information, CMAS information, and second configuration information of the LP-WUS.

In a possible implementation, the LP-WUS sent based on the first MO set further includes a third LP-WUS, the third LP-WUS indicates wake-up information, and the wake-up information is used to wake up a terminal device.

In a possible implementation, the first configuration information is used to configure one or more of a first monitoring periodicity, a first monitoring offset, and first monitoring duration that correspond to the first MO set. The first configuration information is further used to configure one or more of a second monitoring periodicity, a second monitoring offset, and second monitoring duration that correspond to the second MO set.

In a possible implementation, the first configuration information is used to configure the second monitoring periodicity and/or the second monitoring duration, and the processing unit 710 is configured to determine the second monitoring offset based on an identifier of the terminal device.

In a possible implementation, the first configuration information includes a first periodicity configuration parameter, and the first periodicity configuration parameter is used to configure the first monitoring periodicity and the second monitoring periodicity. Alternatively, the first configuration information includes a second periodicity configuration parameter and a third periodicity configuration parameter, the second periodicity configuration parameter is used to configure the first monitoring periodicity, and the third periodicity configuration parameter is used to configure the second monitoring periodicity.

In a possible implementation, the first monitoring periodicity is the same as the second monitoring periodicity, and the second MO set does not overlap with the first MO set.

In a possible implementation, the first configuration information includes a first duration configuration parameter, and the first duration configuration parameter is used to configure the first monitoring duration and the second monitoring duration. Alternatively, the first configuration information includes a second duration configuration parameter and a third duration configuration parameter, the second duration configuration parameter is used to configure the first monitoring duration, and the third duration configuration parameter is used to configure the second monitoring duration.

For more detailed descriptions of the transceiver unit 720 and the processing unit 710, refer to related descriptions of the network device in the method embodiments shown in FIG. 5.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data needed by the processor 810 to run the instructions, or store data generated after the processor 810 runs the instructions.

When the communication apparatus 800 is configured to implement the method shown FIG. 5, the processor 810 is configured to implement a function of the processing unit 710, and the interface circuit 820 is configured to implement a function of the transceiver unit 720.

When the communication apparatus is a chip used in a terminal, the chip of the terminal implements a function of the terminal in the foregoing method embodiments. That the chip of the terminal receives information from a base station may be understood as that the information is first received by other modules (for example, a radio frequency module or an antenna) of the terminal, and then sent by the modules to the chip of the terminal. That the chip of the terminal sends information to the base station may be understood as that the information is first sent to other modules (for example, a radio frequency module or an antenna) of the terminal, and then sent by the modules to the base station.

When the communication apparatus is a chip used in a network device, the chip of the network device implements a function of the network device in the foregoing method embodiments. That the chip of the network device receives information from a terminal may be understood as that the information is first received by other modules (for example, a radio frequency module or an antenna) of the network device, and then sent by the modules to the chip of the network device. That the chip of the network device sends information to the terminal may be understood as that the information is first sent to other modules (for example, a radio frequency module or an antenna) of the network device, and then sent by the modules to the terminal.

In this application, that an entity A sends information to an entity B may be that A directly sends the information to B, or may be that A indirectly sends the information to B by using another entity. Similarly, that the entity B receives the information from the entity A may be that the entity B directly receives the information sent by the entity A, or may be that the entity B indirectly receives, by using another entity, the information sent by the entity A. The entity A and the entity B herein each may be a RAN node or a terminal, or may be a module inside the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip of a terminal and another module of the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by software instructions that are executable by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in the base station or the terminal as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In the formula in this application, the character "/" indicates a "division" relationship between the associated objects. "One or more of A, B, and/or C" or expression in a similar manner may indicate the following cases: A is included, B is included, C is included, A and B are included, A and C are included, B and C are included, and A, B, and C are included.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A wake-up signal monitoring method, wherein the method comprises:

receiving first configuration information of a low-power wake-up signal LP-WUS, wherein the first configuration information is used to configure a first monitoring occasion MO set and a second MO set; and

monitoring the LP-WUS based on the first MO set and the second MO set.

2. The method according to claim 1, wherein the LP-WUS monitored based on the second MO set comprises a second LP-WUS, the second LP-WUS indicates wake-up information, and the wake-up information is used to wake up a terminal device.

3. The method according to claim 1 or 2, wherein the LP-WUS monitored based on the first MO set comprises a first LP-WUS, the first LP-WUS indicates common information, and the common information comprises one or more of the following: system information change indication information SI change, an earthquake and tsunami warning system information ETWS identifier, a commercial mobile alert system information identifier CMAS identifier, cell information, tracking area information, a radio access network area, ETWS information, CMAS information, and second configuration information of the LP-WUS.

4. The method according to claim 3, wherein the LP-WUS monitored based on the first MO set further comprises a third LP-WUS, the third LP-WUS indicates wake-up information, and the wake-up information is used to wake up a terminal device.

5. The method according to any one of claims 1 to 4, wherein the first configuration information is used to configure one or more of a first monitoring periodicity, a first monitoring offset, and first monitoring duration that correspond to the first MO set; and

the first configuration information is further used to configure one or more of a second monitoring periodicity, a second monitoring offset, and second monitoring duration that correspond to the second MO set.

6. The method according to claim 5, wherein the first configuration information is used to configure the second monitoring periodicity and/or the second monitoring duration, and the method further comprises:

determining the second monitoring offset based on an identifier of the terminal device.

7. The method according to claim 5 or 6, wherein the first configuration information comprises a first periodicity configuration parameter, and the first periodicity configuration parameter is used to configure the first monitoring periodicity and the second monitoring periodicity; or

the first configuration information comprises a second periodicity configuration parameter and a third periodicity configuration parameter, the second periodicity configuration parameter is used to configure the first monitoring periodicity, and the third periodicity configuration parameter is used to configure the second monitoring periodicity.

8. The method according to claim 7, wherein the first monitoring periodicity is the same as the second monitoring periodicity, and the second MO set does not overlap with the first MO set.

9. The method according to any one of claims 5 to 8, wherein the first configuration information comprises a first duration configuration parameter, and the first duration configuration parameter is used to configure the first monitoring duration and the second monitoring duration; or

the first configuration information comprises a second duration configuration parameter and a third duration configuration parameter, the second duration configuration parameter is used to configure the first monitoring duration, and the third duration configuration parameter is used to configure the second monitoring duration.

10. A wake-up signal monitoring method, wherein the method comprises:

sending first configuration information of a low-power wake-up signal LP-WUS, wherein the first configuration information is used to configure a first monitoring occasion MO set and a second MO set; and

sending the LP-WUS based on the first MO set and the second MO set.

11. The method according to claim 10, wherein the LP-WUS sent based on the second MO set comprises a second LP-WUS, the second LP-WUS indicates wake-up information, and the wake-up information is used to wake up a terminal device.

12. The method according to claim 10 or 11, wherein the LP-WUS sent based on the first MO set comprises a first LP-WUS, the first LP-WUS indicates common information, and the common information comprises one or more of the following: system information change indication information SI change, an earthquake and tsunami warning system information ETWS identifier, a commercial mobile alert system information identifier CMAS identifier, cell information, tracking area information, a radio access network area, ETWS information, CMAS information, and second configuration information of the LP-WUS.

13. The method according to claim 12, wherein the LP-WUS sent based on the first MO set further comprises a third LP-WUS, the third LP-WUS indicates wake-up information, and the wake-up information is used to wake up a terminal device.

14. The method according to any one of claims 10 to 13, wherein the first configuration information is used to configure one or more of a first monitoring periodicity, a first monitoring offset, and first monitoring duration that correspond to the first MO set; and
the first configuration information is further used to configure one or more of a second monitoring periodicity, a second monitoring offset, and second monitoring duration that correspond to the second MO set.

15. The method according to claim 14, wherein the first configuration information is used to configure the second monitoring periodicity and/or the second monitoring duration, and the method further comprises:
determining the second monitoring offset based on an identifier of the terminal device.

16. The method according to claim 14 or 15, wherein the first configuration information comprises a first periodicity configuration parameter, and the first periodicity configuration parameter is used to configure the first monitoring periodicity and the second monitoring periodicity; or
the first configuration information comprises a second periodicity configuration parameter and a third periodicity configuration parameter, the second periodicity configuration parameter is used to configure the first monitoring periodicity, and the third periodicity configuration parameter is used to configure the second monitoring periodicity.

17. The method according to claim 16, wherein the first monitoring periodicity is the same as the second monitoring periodicity, and the second MO set does not overlap with the first MO set.

18. The method according to any one of claims 14 to 17, wherein the first configuration information comprises a first duration configuration parameter, and the first duration configuration parameter is used to configure the first monitoring duration and the second monitoring duration; or
the first configuration information comprises a second duration configuration parameter and a third duration configuration parameter, the second duration configuration parameter is used to configure the first monitoring duration, and the third duration configuration parameter is used to configure the second monitoring duration.

19. A communication apparatus, comprising a module configured to perform the method according to any one of claims 1 to 9, or comprising a module configured to perform the method according to any one of claims 10 to 18.

20. A communication apparatus, comprising a processor, wherein the processor is configured to perform the method according to any one of claims 1 to 9, or is configured to perform the method according to any one of claims 10 to 18.

21. A computer program product, wherein when being executed, the computer program product implements the method according to any one of claims 1 to 9, or implements the method according to any one of claims 10 to 18.

22. A computer-readable storage medium, wherein the storage medium stores a computer program or instructions; and when the computer program or the instructions are executed by a communication apparatus, the method according to any one of claims 1 to 9 is implemented, or the method according to any one of claims 10 to 18 is implemented.

FIG. 1a

FIG. 1b

FIG. 2

FIG. 3

Monitoring occasions
corresponding to a
terminal device 1 to a
terminal device 4

4a

Continuous
monitoring

4b

Duty cycle
monitoring

4c

FIG. 4

Note:

Monitoring
occasion configured
by a network device

Monitoring
occasion of the
terminal device 1

```
Network                                                    Terminal
device                                                      device
  │                                                            │
  │   S501: First configuration                               │
  │   information that is of an LP-WUS                         │
  │   and that is used to configure a                         │
  │   first MO set and a second MO set                        │
  │──────────────────────────────────────────────────────────▶│
  │                                                            │
  │                            ┌───────────────────────────────┐
  │                            │ S502: Monitor the LP-WUS      │
  │                            │ based on the first MO set and │
  │                            │ the second MO set             │
  │                            └───────────────────────────────┘
  │                                                            │
```

FIG. 5

Note:

▯ MOs 1 of a terminal device 1 and a terminal device 2

▯ MOs 2 of the terminal device 1

▮ MOs 3 of the terminal device 2

FIG. 6

FIG. 7

FIG. 8

## INTERNATIONAL SEARCH REPORT

| International application No. |
| --- |
| **PCT/CN2024/098654** |

| A. | CLASSIFICATION OF SUBJECT MATTER |
| --- | --- |

H04W52/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W52/-; H04W72/-; H04L12/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG, ENTXTC: M个, N个, 标识, 测量, 窗口, 多个, 唤醒信号, 机会, 集, 监测, 监视, 监听, 检测, 配置, 偏移, 设备, 时机, 时间, 探测, 终端, 周期, UE, STA, 组, WUS: DWPI, IEEE, 3GPP, ENTXT, WPABS: detect, duration, group, ID, monitor, occasion, offset, period, set, signal, STA, timing, UE, up, wake, window, WUS, measure, configuration, probE, mutilate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117479271 A (VIVO MOBILE COMMUNICATION CO., LTD.) 30 January 2024 (2024-01-30)<br>description, paragraphs 87-254 | 1-22 |
| X | CN 114424629 A (HUAWEI TECHNOLOGIES CO., LTD.) 29 April 2022 (2022-04-29)<br>description, paragraphs 68-101 | 1-22 |
| X | CN 111757434 A (HUAWEI TECHNOLOGIES CO., LTD.) 09 October 2020 (2020-10-09)<br>description, paragraphs 140-182 | 1-22 |
| X | CN 112567820 A (SONY CORP.) 26 March 2021 (2021-03-26)<br>description, paragraphs 132-147 | 1-22 |
| A | CN 114503681 A (HUAWEI TECHNOLOGIES CO., LTD.) 13 May 2022 (2022-05-13)<br>entire document | 1-22 |
| A | KR 1020220047576 A (LG ELECTRONICS, INC.) 18 April 2022 (2022-04-18)<br>entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 August 2024** | **14 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2"><b>INTERNATIONAL SEARCH REPORT</b><br>Information on patent family members</td><td colspan="2">International application No.<br><b>PCT/CN2024/098654</b></td></tr>
</table>

| Patent document cited in search report | | | Publication date (day/month/year) | Patent family member(s) | | | Publication date (day/month/year) |
|---|---|---|---|---|---|---|---|
| CN | 117479271 | A | 30 January 2024 | WO | 2024017052 | A1 | 25 January 2024 |
| CN | 114424629 | A | 29 April 2022 | WO | 2021062792 | A1 | 08 April 2021 |
| | | | | IN | 202237022097 | A | 01 July 2022 |
| | | | | US | 2022225470 | A1 | 14 July 2022 |
| | | | | EP | 4030831 | A1 | 20 July 2022 |
| | | | | VN | 88080 | A | 25 July 2022 |
| | | | | EP | 4030831 | A4 | 28 September 2022 |
| | | | | JP | 2022550159 | W | 30 November 2022 |
| | | | | JP | 7400092 | B2 | 18 December 2023 |
| | | | | CN | 114424629 | B | 03 May 2024 |
| CN | 111757434 | A | 09 October 2020 | WO | 2020200075 | A1 | 08 October 2020 |
| | | | | EP | 3937549 | A1 | 12 January 2022 |
| | | | | US | 2022022137 | A1 | 20 January 2022 |
| | | | | VN | 83686 | A | 25 January 2022 |
| | | | | BR | 112021019295 | A2 | 01 February 2022 |
| | | | | IN | IN202137048387 | A | 11 March 2022 |
| | | | | EP | 3937549 | A4 | 04 May 2022 |
| CN | 112567820 | A | 26 March 2021 | JP | 2021533688 | A | 02 December 2021 |
| | | | | JP | 7128954 | B2 | 31 August 2022 |
| | | | | US | 2021185611 | A1 | 17 June 2021 |
| | | | | EP | 3834499 | A1 | 16 June 2021 |
| | | | | WO | 2020030497 | A1 | 13 February 2020 |
| | | | | CN | 112567820 | B | 29 March 2024 |
| CN | 114503681 | A | 13 May 2022 | WO | 2021062784 | A1 | 08 April 2021 |
| | | | | EP | 4024961 | A1 | 06 July 2022 |
| | | | | US | 2022225234 | A1 | 14 July 2022 |
| | | | | EP | 4024961 | A4 | 24 August 2022 |
| | | | | CN | 114503681 | B | 29 December 2023 |
| KR | 1020220047576 | A | 18 April 2022 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310845224